# EUROPEAN PATENT SPECIFICATION

(11) **EP 2 623 247 B1**
(45) Date of publication and mention of the grant of the patent: **11.12.2019**
(21) Application number: 11829140.0
(22) Date of filing: 27.09.2011
(51) Int. Cl.: B23K 11/11, B23K 11/30

(54) **WELDING DEVICE**
SCHWEISSVORRICHTUNG
DISPOSITIF DE SOUDAGE

(30) Priority: 01.10.2010 JP 2010224303; 01.10.2010 JP 2010224301; 30.09.2010 JP 2010222769
(43) Date of publication of application: 07.08.2013
(73) Proprietor: Honda Motor Co., Ltd., Minato-ku Tokyo 107-8556 (JP)
(72) Inventor: GOTO, Akira, Hagagun Tochigi 321-3395 (JP); MIYASAKA, Shinichi, Hagagun Tochigi 321-3395 (JP); IKEDA, Tatsuro, Tochigi 321-3395 (JP); MORITA, Takahiro, Tochigi 321-3395 (JP)
(74) Representative: Beder, Jens
(86) International application number: PCT/JP2011/072121
(87) International publication number: WO 2012/043587

(56) References cited:
- DE-A1- 4 323 148
- FR-A1- 2 878 175
- JP-A- 59 193 773
- JP-A- 61 071 188
- JP-A- 62 016 886
- JP-A- 62 081 276
- JP-A- 62 289 379
- JP-A- 63 068 279
- JP-A- 63 183 781
- JP-A- S59 193 773
- JP-A- 2003 211 271
- JP-A- 2008 023 554
- JP-U- 63 076 384

## Description

### Technical Field

The present invention relates to a welding apparatus (device) for welding a stacked body of a plurality of workpieces.

### Background Art

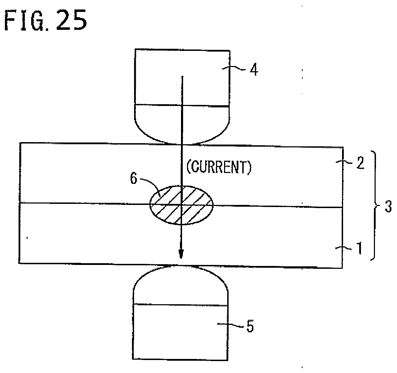

FIG. 25 is a schematic front view for illustrating a spot welding process for joining high resistance workpieces 1, 2, which are made of a so-called high tensile strength steel and have a large thickness to exhibit a high electric resistance. The two high resistance workpieces 1, 2 are stacked to form a stacked body 3. The stacked body 3 is gripped and pressed between a first welding tip 4 and a second welding tip 5. When the first welding tip 4 and the second welding tip 5 are energized, a portion is heated to form a melted portion 6 in the vicinity of the contact surface between the high resistance workpieces 1, 2. Then, the melted portion 6 is solidified to generate a solid phase, which is referred to as a nugget.

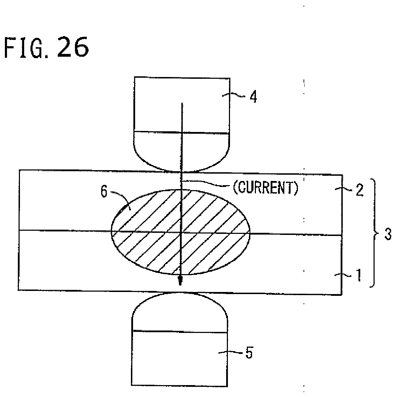

Since the high resistance workpieces 1, 2 have the high electric resistance, a large amount of Joule heating is generated in the vicinity of the contact surface during the energization, so that the melted portion 6 grows larger as shown in FIG. 26 in a relatively short time. Therefore, the melted portion 6 is liable to be scattered (spatter generation is liable to be caused). Thus, in the spot welding process for joining the high resistance workpieces 1, 2, it is necessary to highly accurately control a welding current in view of preventing the spatter generation. However, such control cannot be achieved easily. This problem is caused even in the case of joining a thinner high tensile strength steel workpiece.

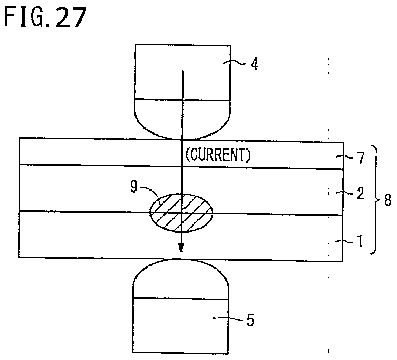

In the case of joining three or more workpieces, the workpieces may contain different materials and may have different thicknesses. For example, as shown in FIG. 27, an outermost workpiece (a low resistance workpiece 7) may have the smallest thickness. Incidentally, in FIG. 27, the low resistance workpiece 7 is made of a mild steel, exhibits a low electric resistance, and is stacked on the high resistance workpieces 1, 2 shown in FIGS. 25 and 26 to form a stacked body 8.

In the process of spot welding the stacked body 8, a larger amount of Joule heating is generated in the vicinity of the contact surface between the high resistance workpieces 1, 2 than in the vicinity of the contact surface between the low resistance workpiece 7 and the high resistance workpiece 2. This is because a higher contact resistance is generated in the vicinity of the contact surface between the high resistance workpieces 1, 2.

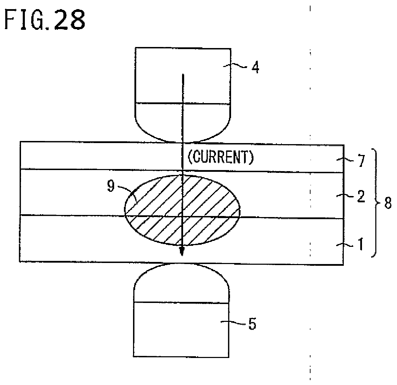

Therefore, in the stacked body 8, a melted portion 9 is developed first in the vicinity of the contact surface between the high resistance workpieces 1, 2. As shown in FIG. 28, the melted portion 9 may grow larger before another melted portion is developed in the vicinity of the contact surface between the low resistance workpiece 7 and the high resistance workpiece 2. When the energization is continued to form the other melted portion in the vicinity of the contact surface between the low resistance workpiece 7 and the high resistance workpiece 2, the spatter generation may be caused in the vicinity of the contact surface between the high resistance workpieces 1, 2.

However, if the energization is stopped, the melted portion and hence the nugget are not grown to a sufficiently large size in the vicinity of the contact surface between the low resistance workpiece 7 and the high resistance workpiece 2. Accordingly, a desired bonding strength is hardly achieved between the low resistance workpiece 7 and the high resistance workpiece 2. This problem may occur also with an indirect feeding type welding apparatus.

In Japanese Patent No. 3894545, the applicant has proposed that, in the process of spot welding such a stacked body, the pressing force of the first welding tip, applied to the low resistance workpiece, is made smaller than that of the second welding tip. In this case, the contact pressure of the low resistance workpiece against the high resistance workpiece is reduced. Therefore, the contact resistance between the low resistance workpiece and the high resistance workpiece is increased, so that a sufficient amount of Joule heating is generated at the contact surface. Consequently, the nugget between the low resistance workpiece and the high resistance workpiece can be grown to approximately the same size as the nugget between the high resistance workpieces, whereby the resultant stacked body can exhibit an excellent bonding strength.

A spot wielding apparatus and method is also known from FR 2 878 175 A1, forming the basis for the preamble of claim 1, wherein the dissipation capabilities of the vibratory energy of the structures assembled by welding spots are improved. According to this invention, a permanent contact zone is created for the elements to be welded together, in the immediate vicinity of the welding point, as well as a contact pressure field in said zone. Therefore, also pressing members are included in the apparatus. The pressing members are displaced by a mechanism that is electrically isolated from a welding tip and pressing member holder. This apparatus and method is particularly applicable to the automotive industry.

### Summary of Invention

A general object of the present invention is to provide a welding apparatus capable of forming a sufficiently large nugget in the vicinity of a contact surface between workpieces in a stacked body.

A principal object of the present invention is to provide a welding apparatus capable of eliminating the possibility of spatter generation.

According to an aspect of the present invention, there is provided a spot welding apparatus for spot welding a stacked body of a plurality of workpieces including the outermost workpiece, comprising first and second welding tips, between which the stacked body is interposed, a pressing member configured to press the outermost workpiece of the stacked body, the first welding tip and the pressing member being brought into contact with different portions of the outermost workpiece, and a holder for holding the first welding tip and the pressing member, which is displaced by a holder displacement mechanism, wherein the holder has a bore, an air cylinder is being provided in the holder for displacing the pressing member, and a sleeve inserted into the bore, wherein the air cylinder is formed in the sleeve and comprises a piston rod connected to the pressing member at one end; and a piston connected to the other end of the piston rod, the piston being in sliding contact with the sleeve, and the sleeve having an insulating property so that the piston is electrically isolated from the holder.

In any aspect, the pressing forces of the first welding tip and the pressing member are balanced with the pressing force of the second welding tip, so that the pressing force of the first welding tip is smaller than that of the second welding tip. Therefore, in the stacked body between the first welding tip and the substantially opposite second welding tip, the total of the pressing forces acts on a wider or larger area in a position closer to the second welding tip. Thus, the total force acting on the contact surface between the outermost workpiece (in contact with the first welding tip) and the adjacent workpiece is smaller than the total force acting on the other contact surface between the workpieces.

Since the pressing forces are distributed in this manner, the contact area at the contact surface between the outermost workpiece and the adjacent workpiece is smaller than the contact area at the other contact surface between the workpieces. Therefore, the contact resistance can be made higher to increase the generation amount of Joule heating at the contact surface between the outermost workpiece and the adjacent workpiece. Consequently, the nugget can be grown larger on the contact surface, and thus the bonding strength can be improved, between the outermost workpiece and the adjacent workpiece.

Since the metallic plates are pressed by the pressing member, the outermost workpiece can be prevented from separating from the adjacent workpiece. Consequently, spatter scattering of the softened melted portion from a gap between the outermost workpiece and the adjacent workpiece can be prevented.

The first welding tip and the pressing member are attached to one holder (support member). In this case, the welding apparatus can be prevented from having a complicated or large structure. Therefore, even in a case where an intricately-shaped stacked body is welded, the stacked body can be located in a desired welding position without interference from the first welding tip and the pressing member.

The pressing member may be utilized as an auxiliary electrode having a polarity opposite to that of the first welding tip, and a branching current may flow from the first welding tip to the auxiliary electrode or from the auxiliary electrode to the first welding tip in an energization process.

In this case, the current flows through the outermost workpiece in the direction from the first welding tip to the auxiliary electrode or the opposite direction. Therefore, the contact surface between the outermost workpiece and the adjacent workpiece is sufficiently heated by the current. Consequently, the nugget can be grown sufficiently larger at the contact surface, so that the resultant bonded product can be further excellent in bonding strength.

The welding apparatus may further comprise, in the vicinity of the second welding tip, another auxiliary electrode having a polarity opposite to that of the second welding tip. In this case, after the branching current from the first welding tip to the auxiliary electrode (in the vicinity of the first welding tip) or from the auxiliary electrode to the first welding tip has vanished, another branching current may flow from the other auxiliary electrode (in the vicinity of the second welding tip) to the second welding tip or from the second welding tip to the other auxiliary electrode.

In this case, the nugget can be grown sufficiently larger in the vicinity of the contact surface between the outermost workpiece against which the second welding tip is in abutment and the workpiece adjacent thereto.

For example, in a case where the stacked body interferes with the first welding tip and the pressing member and thereby cannot be readily welded, it is preferred that a first support tip and a support pressing member are interposed between the first welding tip and the stacked body and between the pressing member and the stacked body respectively, and a second support tip is interposed between the second welding tip and the stacked body.

In such a structure, pressing positions of the first and second welding tips and the pressing member can be away from the stacked body, while the first and second support tips and the support pressing member are brought into contact with the stacked body. Therefore, even when the stacked body has a complicated shape, the stacked body can be easily welded.

In this structure, the pressing forces of the first support tip and the support pressing member are balanced with the pressing force of the second support tip. Thus, the total of the pressing forces acts on a wider area in a position closer to the second support tip than to the first support tip.

It is to be understood that the support pressing member may act as an electrode in the same manner as the pressing member, so that a current may flow in the direction from the support tip to the support pressing member or the opposite direction. In this case, the current flows through the outermost workpiece in the stacked body. Therefore, the contact surface between the outermost workpiece and the adjacent workpiece is sufficiently heated by the current. Consequently, the nugget can be grown sufficiently larger at the contact surface, so that the resultant joined regions can be further excellent in bonding strength.

### Brief Description of Drawings

FIG. 1 is an enlarged view of essential features showing a welding apparatus (spot welding apparatus) according to a first embodiment of the present invention;
FIG. 2 is an enlarged vertical cross-sectional view of essential features showing a holder in the spot welding apparatus of FIG. 1;
FIG. 3 is an enlarged vertical cross-sectional view of essential features showing a condition in which a downward movement of a pressing member shown in FIG. 2 is moved downward;
FIG. 4 is a schematic front view of essential features showing a stacked body to be welded, gripped by an upper tip (first welding tip), a lower tip (second welding tip), and pressing rods (pressing members);
FIG. 5 is a schematic front view (with a graph) for illustrating an appropriate surface pressure distribution between an uppermost workpiece and a workpiece located immediately beneath the uppermost workpiece in the stacked body;
FIG. 6 is a schematic front view of the stacked body, gripped only by the lower and upper tips;
FIG. 7 is a schematic vertical cross-sectional view of the stacked body at the start of energization for generating a current flow from the upper tip to the lower tip after the state of FIG. 4;
FIG. 8 is a schematic front view of essential features showing a stacked body different from that of FIG. 4, gripped by the lower tip, the upper tip, and the pressing rods (pressing members);
FIG. 9 is a schematic front view of essential features showing a stacked body different from those of FIGS. 4 and 8, gripped by the lower tip, the upper tip, and the pressing rods (pressing members);
FIG. 10 is a schematic front view of essential features showing the stacked body, gripped by the upper tip, the lower tip, and auxiliary electrodes in a welding apparatus (spot welding apparatus) according to a second embodiment of the present invention;
FIG. 11 is a schematic vertical cross-sectional view of the stacked body at the start of energization for generating a current flow from the upper tip to the lower tip after the state of FIG. 10;
FIG. 12 is a schematic vertical cross-sectional view of the stacked body in the process of further performing the energization continuously after the state of FIG. 11;
FIG. 13 is a schematic vertical cross-sectional view of the stacked body in the process of further performing the energization from the upper tip to the lower tip continuously after only the auxiliary electrodes are separated from the stacked body;
FIG. 14 is a schematic vertical cross-sectional view of the stacked body after completion of the energization (spot welding) by separating the upper tip from the stacked body after the state of FIG. 13;
FIG. 15 is a schematic front view of essential features showing a stacked body different from that of FIG. 10, gripped by the lower tip, the upper tip, and the auxiliary electrodes, at the start of the energization;
FIG. 16 is a schematic vertical cross-sectional view of the stacked body in the process of further performing the energization from the upper tip to the lower tip continuously after the auxiliary electrodes are electrically disconnected from a negative terminal of a power source;
FIG. 17 is a schematic vertical cross-sectional view of the stacked body at the end of the energization (spot welding);
FIG. 18 is a schematic front view of essential features showing a stacked body different from those of FIGS. 10 and 15, gripped by the lower tip, the upper tip, and the auxiliary electrodes, at the start of the energization;
FIG. 19 is a schematic vertical cross-sectional view of the stacked body after completion of the energization (spot welding);
FIG. 20 is a schematic front view of essential features showing a stacked body different from those of FIGS. 10 and 15, gripped by the lower tip, the upper tip, and the auxiliary electrodes, at the start of the energization;
FIG. 21 is a schematic vertical cross-sectional view of the stacked body in the process of further performing the energization from the upper tip to the lower tip continuously after the auxiliary electrodes in the vicinity of the upper tip are electrically disconnected from the negative terminal of the power source, and the auxiliary electrodes in the vicinity of the lower tip are brought into contact with a workpiece;
FIG. 22 is a schematic vertical cross-sectional view of the stacked body in the process of further performing the energization from the upper tip to the lower tip continuously after the auxiliary electrodes in the vicinity of the lower tip are electrically disconnected from a positive terminal of the power source;
FIG. 23 is a schematic vertical cross-sectional view of the stacked body in which a current flows from the lower tip and the auxiliary electrodes to the upper tip in the direction opposite to that of FIG. 11;
FIG. 24 is a schematic vertical cross-sectional view of a current flow from the upper tip to the auxiliary electrodes through the uppermost workpiece and the workpiece located immediately beneath the uppermost workpiece in the stacked body;
FIG. 25 is a schematic vertical cross-sectional view of a stacked body, gripped only by a lower tip and an upper tip, in the process of generating a current flow from the upper tip to the lower tip in a conventional spot welding method;
FIG. 26 is a schematic vertical cross-sectional view of a melted portion grown larger after the state of FIG. 25;
FIG. 27 is a schematic vertical cross-sectional view of a stacked body different from that of FIG. 25, gripped only by the lower and upper tips, in the process of generating a current flow from the upper tip to the lower tip;
FIG. 28 is a schematic vertical cross-sectional view of a melted portion grown larger after the state of FIG. 27;

### Description of Embodiments

Several preferred embodiments of the welding apparatuses of the present invention will be described in detail below with reference to the accompanying drawings.

Spot welding apparatuses will be described below.

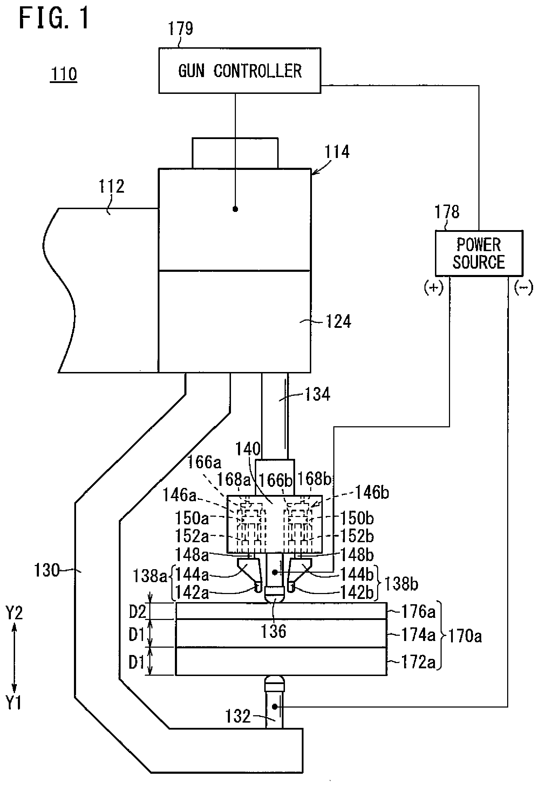

FIG. 1 is an enlarged view of a spot welding apparatus 110 according to a first embodiment. The spot welding apparatus 110 contains a robot having an arm (not shown) and a welding gun 114 supported on a wrist 112 of the arm.

The welding gun 114 is a so-called C-type gun having an approximately C-shaped fixed arm 130 under a gun body 124. A lower tip 132 is disposed as a second welding tip on the lower end of the fixed arm 130 in confronting relation to the gun body 124, and extends toward the gun body 124.

The gun body 124 contains a ball screw mechanism (not shown) for displacing a holder (support) 140 in the vertical direction of FIG. 1. Thus, the ball screw mechanism is a holder (support) displacement mechanism for displacing the holder 140.

A displacement shaft 134 projects from the gun body 124 and extends toward the lower tip 132, and is displaced by a ball screw in the ball screw mechanism in the vertical direction (arrow Y2 or Y1 direction) of FIG. 1. The ball screw is rotated by a servomotor (not shown) in the ball screw mechanism.

The holder 140 is disposed on the end of the displacement shaft 134 to support an upper tip 136 used as a first welding tip and pressing members 138a, 138b.

The pressing member 138a has an end 142a having a rod shape extending parallel to the upper tip 136, and further has a base 144a having an approximately trapezoidal shape as viewed from the front. An air cylinder 146a is disposed as a pressing member displacement mechanism in the holder 140, and the base 144a is connected with a piston rod 148a in the air cylinder 146a. The holder 140 is a conductor, and thereby can transfer a current to the upper tip 136.

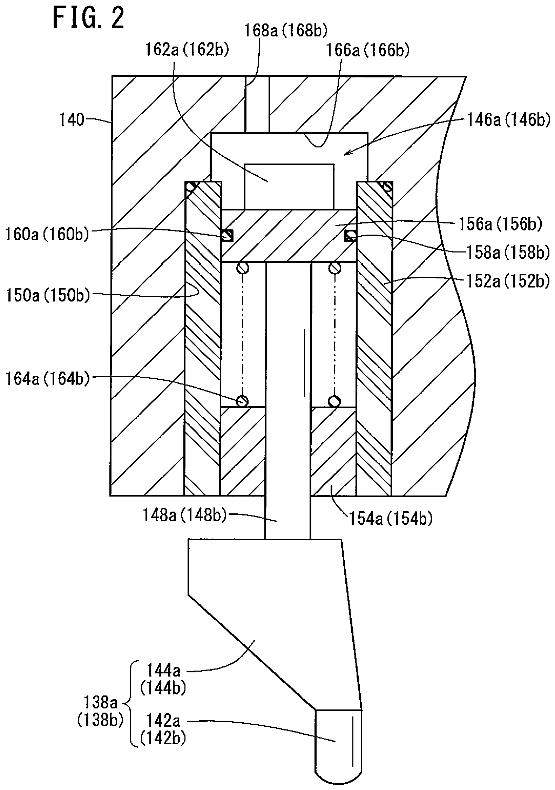

As in the enlarged view of essential features showing in FIG. 2, the holder 140 has a bore 150a, into which the piston rod 148a is inserted. A sleeve 152a is inserted into the bore 150a, and a bearing 154a is inserted into the sleeve 152a. Furthermore, the piston rod 148a is inserted into the bearing 154a, and a piston 156a is slidably in contact with the sleeve 152a.

A round groove 158a is formed circumferentially on the side wall of the piston 156a, and a sealant O-ring 160a is placed in the round groove 158a. A stopper 162a is disposed on the head of the piston 156a, and extends toward the top of the bore 150a. The stopper 162a is composed of an insulator.

The sleeve 152a is composed of an aluminum material or an aluminum alloy material, and its surface is subjected to a hard alumite treatment. Thus, an oxide film containing a hard alumite is formed on the outer and inner peripheral walls of the sleeve 152a. The oxide film has an insulating property, and also the sleeve 152a has an insulating property. In other words, the sleeve 152a is an insulator, whereby the piston 156a is electrically isolated from the holder 140.

Alternatively, the sleeve 152a may be composed of an insulator such as a bakelite material or the like. In a case where the sleeve 152a is composed of a conductive material, the sleeve 152a may be electrically isolated from the holder 140 by disposing an insulator therebetween.

The piston rod 148a is inserted in a coil spring 164a. One end of the coil spring 164a is stopped by the top of the bearing 154a, and the other end is in contact with the bottom of the piston 156a. When the piston rod 148a is displaced (lowered) in the downward direction of FIGS. 1 and 2, the coil spring 164a is compressed. Meanwhile, the coil spring 164a acts to apply an elastic force for displacing (lifting) the piston rod 148a in the upward direction.

A room 166a is formed between the bore 150a and the piston 156a. An air supply/discharge passage 168a is communicated with the room 166a as a through-hole in the holder 140. The air supply/discharge passage 168a is connected with a tube in a compressed air supply/discharge mechanism (not shown). Thus, a compressed air is supplied to and discharged from the room 166a by the compressed air supply/discharge mechanism.

The other pressing member 138b and the air cylinder 146b have the same structures as above. The components of the pressing member 138b and the air cylinder 146b, which are identical to those of the pressing member 138a and the air cylinder 146a, are denoted by identical reference numerals and are marked with an additional character "b" instead of "a". Therefore, detailed explanations thereof are omitted.

A stacked body 170a to be welded contains three metallic plates 172a, 174a, 176a arranged upwardly in this order. Each of the metallic plates 172a, 174a has a thickness D1 (e.g. about 1 to 2 mm), and the metallic plate 176a has a thickness D2 smaller than the thickness D1 (e.g. about 0.5 to 0.7 mm). Thus, the metallic plates 172a, 174a have the same thickness, and the metallic plate 176a is thinner than the metallic plates 172a, 174a. In other words, the metallic plate 176a has the smallest thickness among the three metallic plates 172a, 174a, 176a in the stacked body 170a.

For example, each of the metallic plates 172a, 174a is a high resistance workpiece made of a so-called high tensile strength steel, such as a high-performance high tensile strength steel sheet JAC590, JAC780, or JAC980 (defined according to the Japan Iron and Steel Federation Standard). For example, the metallic plate 176a is a low resistance workpiece made of a so-called mild steel, such as a high-performance steel sheet JAC270 for press-forming (defined according to the Japan Iron and Steel Federation Standard). The metallic plates 172a, 174a may be made of the same or different metal materials.

The stacked body 170a to be welded is interposed between the lower tip 132 and the upper tip 136, and is energized by the lower tip 132 and the upper tip 136. The lower tip 132 is electrically connected to a negative terminal of a power source 178, and the upper tip 136 is electrically connected to a positive terminal of the power source 178. Therefore, in the first embodiment, a current flows from the upper tip 136 to the lower tip 132.

As described in detail hereinafter, the distances Z1, Z2 between the upper tip 136 and the pressing members 138a, 138b are controlled to achieve an appropriate pressure distribution in the metallic plate 176a and the metallic plate 174a located immediately beneath the metallic plate 176a.

In this structure, the servomotor in the ball screw mechanism, the compressed air supply/discharge mechanism with the air cylinders 146a, 146b, and the power source 178 are electrically connected to a gun controller 179 serving as a control means. Thus, the operation, actuation, and deactuation of the servomotor, the compressed air supply/discharge mechanism, and the power source 178 are controlled by the gun controller 179.

The spot welding apparatus 110 of the first embodiment is basically constructed as described above. Operations and advantages of the spot welding apparatus 110 will be described below in relation to a spot welding method according to the first embodiment.

In the spot welding method for welding the stacked body 170a, i.e. for joining the metallic plates 172a, 174a to each other as well as joining the metallic plates 174a, 176a to each other, first the robot moves the wrist 112 and thus the welding gun 114 to position the stacked body 170a between the lower tip 132 and the upper tip 136.

After the gun body 124 is lowered to a predetermined position, the servomotor in the ball screw mechanism is actuated to start the rotation of the ball screw under the control of the gun controller 179. Then, the upper tip 136 and the pressing members 138a, 138b are moved downward in the arrow Y1 direction closer to the stacked body 170a. Consequently, the stacked body 170a is gripped between the lower tip 132 and the upper tip 136.

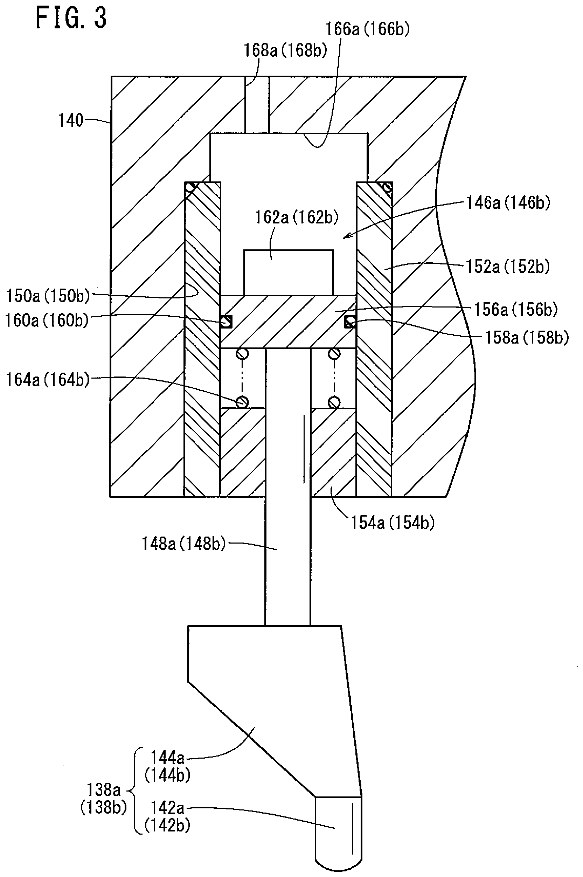

Meanwhile, the compressed air supply/discharge mechanism is actuated by the gun controller 179, whereby the compressed air is supplied through the air supply/discharge passages 168a, 168b to the rooms 166a, 166b. The pistons 156a, 156b are pressed by the compressed air in the rooms 166a, 166b, so that the pistons 156a, 156b and the piston rods 148a, 148b are lowered down while compressing the coil springs 164a, 164b as shown in FIG. 3. Leakage of the compressed air from the rooms 166a, 166b is prevented by the O-rings 160a, 160b attached to the pistons 156a, 156b.

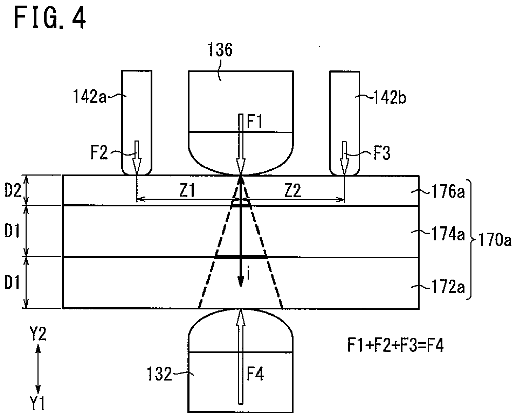

The piston rods 148a, 148b are moved downward, and thus the pressing members 138a, 138b disposed on the ends of the piston rods 148a, 148b are lowered toward the stacked body 170a in the arrow Y1 direction. Consequently, before, at the same time as, or after the gripping of the stacked body 170a between the lower tip 132 and the upper tip 136, the pressing members 138a, 138b are brought into contact with the metallic plate 176a. FIG. 4 is a schematic vertical cross-sectional view of the stacked body 170a in this step.

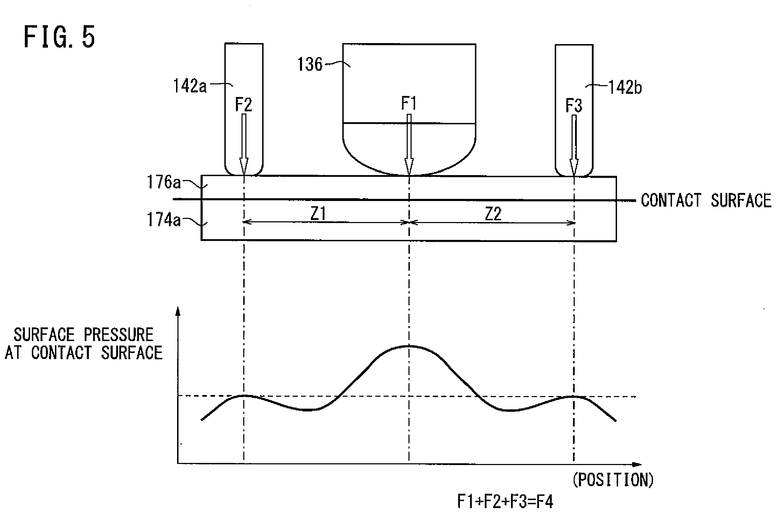

The distances Z1, Z2 between the upper tip 136 and the pressing members 138a, 138b are controlled such that as shown in FIG. 5, a portion pressed by the upper tip 136 exhibits the highest surface pressure, and portions pressed by the pressing members 138a, 138b exhibit the second highest surface pressure, at the contact surface between the metallic plates 176a, 174a. The distance Z1 is preferably equal to the distance Z2.

In other words, at the contact surface, some portions exhibit surface pressures lower than the above high pressures obtained due to the upper tip 136 and the pressing members 138a, 138b. Consequently, a pressing force distribution shown in FIG. 4 is achieved. The distribution will be described in detail below.

The gun controller 179 controls the rotating force of the servomotor for rotating the ball screw in the ball screw mechanism and the pressing forces of the compressed air against the pistons 156a, 156b (the moving forces of the air cylinders 146a, 146b) such that the total pressing force (F1 + F2 + F3) of the upper tip 136 and the pressing members 138a, 138b against the metallic plate 176a is well balanced with the pressing force (F4) of the lower tip 132 against the metallic plate 172a. By this control, the total pressing force (F1 + F2 + F3) applied to the stacked body 170a in the arrow Y1 direction is made approximately equal to the pressing force (F4) applied to the stacked body 170a in the arrow Y2 direction. The pressing force F2 is preferably equal to the pressing force F3.

In this case, the relation of F1 < F4 is satisfied. Therefore, as schematically shown in FIG. 4, in the stacked body 170a, the total pressing force of the lower tip 132 and the upper tip 136 acts on a wider (larger) area as the force proceeds from the upper tip 136 toward the lower tip 132. Thus, the force acting on the contact surface between the metallic plates 174a, 176a is smaller than the force acting on the contact surface between the metallic plates 172a, 174a. In a case where the distances Z1, Z2 are excessively small, the stacked body 170a does not have the above described portions, which exhibit surface pressures lower than the high pressures obtained due to the upper tip 136 and the pressing members 138a, 138b. In this case, the appropriate distribution is hardly achieved.

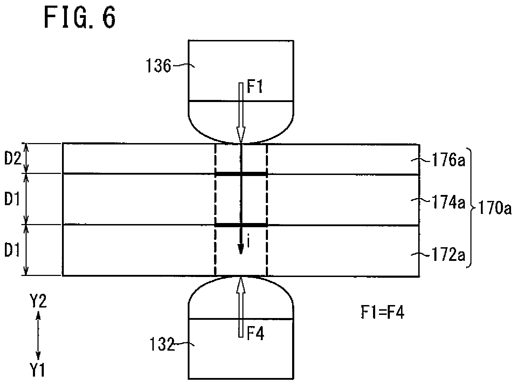

In a case where the pressing members 138a, 138b are not used for satisfying the relation of F1 = F4, a pressing force distribution schematically shown in FIG. 6 is achieved in the stacked body 170a by the lower tip 132 and the upper tip 136. As shown in FIG. 6, in this case, the total force acts uniformly over the stacked body 170a from the upper tip 136 to the lower tip 132. In other words, the force acting on the contact surface between the metallic plates 174a, 176a is equal to the force acting on the contact surface between the metallic plates 172a, 174a.

In FIGS. 4 and 6, at the contact surface between the metallic plates 174a, 176a, an area, on which the force acts, is represented by a thick solid line. As is clear from the comparison between FIGS. 4 and 6, the area, on which the force acts, is smaller under the condition of F1 < F4 than under the condition of F1 = F4. Thus, the metallic plate 176a has an area pressed against the metallic plate 174a, and the area is smaller under the condition of F1 < F4 than under the condition of F1 = F4. In other words, the contact area between the metallic plates 174a, 176a is smaller under the condition of F1 < F4.

When the total pressing force is distributed from the upper tip 136 to the lower tip 132 in the above manner to achieve the smaller contact area between the metallic plates 174a, 176a, a reaction force is generated in the direction from the stacked body 170a toward the upper tip 136. In the first embodiment, the pressing members 138a, 138b are subjected to the reaction force.

As described above, the holder 140 having the pressing members 138a, 138b and the air cylinders 146a, 146b is supported by the displacement shaft 134 connected to the ball screw mechanism in the gun body 124. Therefore, the reaction force acting on the pressing members 138a, 138b is absorbed by the gun body 124 (the welding gun 114).

Thus, the reaction force derived from the stacked body 170a can be prevented from acting on the robot. For this reason, the robot is not required to have a high rigidity. In other words, the robot can be reduced in size, resulting in low equipment investment.

Next, the gun controller 179 sends, to the power source 178, a control signal for starting energization. Then, as shown in FIG. 4 (and FIG. 6), a current i starts to flow in the direction from the upper tip 136 toward the lower tip 132. This current flow is achieved because the upper tip 136 and the lower tip 132 are connected to the positive and negative terminals of the power source 178 respectively as described above. The contact surface between the metallic plates 172a, 174a and the contact surface between the metallic plates 174a, 176a are heated by Joule heating generated due to the current i.

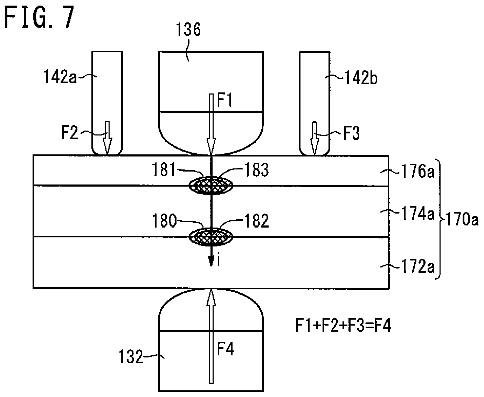

As described above, the contact area between the metallic plates 176a, 174a is smaller in FIG. 4 than in FIG. 6. Therefore, the contact resistance and the current density at the contact surface between the metallic plates 174a, 176a are higher in FIG. 4 than in FIG. 6 (i.e. under the condition of F1 < F4 than under the condition of F1 = F4). Thus, the generated amount of Joule heating (i.e. the amount of generated heat) is larger under the condition of F1 < F4 than under the condition of F1 = F4. Consequently, under the condition of F1 < F4, as shown in FIG. 7, a heated region 180 in the vicinity of the contact surface between the metallic plates 172a, 174a and a heated region 181 in the vicinity of the contact surface between the metallic plates 174a, 176a are grown to approximately the same size.

The contact surface between the metallic plates 172a, 174a and the contact surface between the metallic plates 174a, 176a are heated to a sufficient temperature and melted by the heated regions 180, 181. Thus obtained melted portions are cooled and solidified, whereby nuggets 182, 183 are formed between the metallic plates 172a, 174a and between the metallic plates 174a, 176a respectively. Though the nuggets 182, 183 are shown in FIG. 7 to facilitate understanding, the nuggets 182, 183 are in the liquid-phase states of the melted portions during the energization. Such melted portions are shown in this manner also in the following drawings.

As described above, the heated region 180 in the vicinity of the contact surface between the metallic plates 172a, 174a and the heated region 181 in the vicinity of the contact surface between the metallic plates 174a, 176a have approximately the same size. Therefore, also the nuggets 182, 183 have approximately the same size.

In the process of forming the melted portion, the metallic plate 176a is pressed against the metallic plate 174a by the pressing members 138a, 138b. The metallic plate 176a having a low rigidity can be prevented by such pressing from warping and thus from separating from the metallic plate 174a during the energization (heating). Thus, spatter scattering of the softened melted portion from a gap between the metallic plates 176a, 174a can be prevented.

The sleeves 152a, 152b are interposed between the holder 140 and the pistons 156a, 156b (or the bearings 154a, 154b) respectively. As described above, the sleeves 152a, 152b are an insulator, so that the current to be applied to the upper tip 136 is not transferred from the holder 140 to the pistons 156a, 156b and hence the pressing members 138a, 138b.

After the melted portions are sufficiently grown in a predetermined time, the energization is stopped, and the holder 140 is moved upward to separate the upper tip 136 from the metallic plate 176a. Alternatively, the upper tip 136 and the lower tip 132 may be electrically isolated only by lifting the holder 140 to separate the upper tip 136 from the metallic plate 176a.

At the same time as or after the stop of the energization, the compressed air is discharged from the rooms 166a, 166b (see FIG. 2) by the compressed air supply/discharge mechanism. Consequently, the elastic forces of the coil springs 164a, 164b become higher than the pressing forces of the compressed air on the pistons 156a, 156b. Thus, the pistons 156a, 156b are moved upward by the elastic forces of the coil springs 164a, 164b, and are returned to the original positions set before the compressed air supply. Also the pressing members 138a, 138b are moved upward and returned to the original positions.

By the upward movement, the stoppers 162a, 162b disposed on the heads of the pistons 156a, 156b are brought into contact with the tops of the bores 150a, 150b (the rooms 166a, 166b). The pistons 156a, 156b are prevented from being further lifted by the contact. Since the stoppers 162a, 162b are composed of an insulator as described above, even when the pistons 156a, 156b are lifted and brought into contact with the tops of the rooms 166a, 166b during the energization of the upper tip 136 and the lower tip 132, the current is not transferred from the holder 140 to the pistons 156a, 156b.

The operations from the start to the end of the spot welding method are performed under the control of the gun controller 179.

The energization is stopped in this manner, so that the heating of the metallic plates 172a, 174a, 176a is stopped. The melted portions are cooled and solidified with time to form the nuggets 182, 183 respectively. The metallic plates 172a, 174a are joined to each other by the nugget 182, and the metallic plates 174a, 176a are joined to each other by the nugget 183, to obtain a bonded product.

The bonded product is excellent in the bonding strengths between the metallic plates 172a, 174a and between the metallic plates 174a, 176a. This is because a sufficient amount of Joule heating is generated and the nugget 183 is sufficiently grown at the contact surface between the metallic plates 174a, 176a as described above.

As described above, in the first embodiment, the nugget 183 between the metallic plates 174a, 176a can be grown to a size approximately equal to that of the nugget 182 between the metallic plates 172a, 174a while preventing the spatter generation, whereby the bonded product can be produced with the excellent bonding strength between the metallic plates 174a, 176a.

Since only the air cylinders 146a, 146b are attached to the common holder 140 for supporting the upper tip 136, the welding apparatus can be prevented from having a complicated or large structure. Therefore, even in a case where an intricately-shaped stacked body is welded, the stacked body can be located in a desired welding position without interference from the pressing members 138a, 138b and the upper tip 136.

Since the pressing members 138a, 138b are closer to the air cylinders 146a, 146b, the offset loads on the air cylinders 146a, 146b can be easily reduced.

In the first embodiment, the nugget 183 between the metallic plates 174a, 176a can be grown further larger by increasing the pressing forces F2, F3 of the pressing members 138a, 138b. However, the size of the nugget 183 tends to become saturated at certain levels of the pressing forces F2, F3. In other words, the nugget 183 is hardly grown larger than a certain size by excessively increasing the pressing forces F2, F3. Furthermore, in the case of excessively increasing the pressing forces F2, F3, the pressing force F1 has to be excessively lowered in order to balancing the total force of the pressing forces F1, F2, F3 with the pressing force F4. As a result, the size of the nugget 182 between the metallic plates 172a, 174a is reduced.

Consequently, it is preferred that the difference between the pressing force F1 of the upper tip 136 and the pressing forces F2, F3 of the pressing members 138a, 138b is determined in view of maximizing the sizes of the nuggets 182, 183.

In any case, various pressure application means such as spring coils, servomotors, and hydraulic cylinders may be used instead of the air cylinders 146a, 146b.

The combination of the materials of the metallic plates 172a, 174a, 176a is not particularly limited to the above combination of the steel materials. The metallic plates 172a, 174a, 176a may be composed of any material as long as they can be spot-welded. For example, all the metallic plates 172a, 174a, 176a may be composed of a mild steel. Alternatively, the metallic plates 174a, 176a may be composed of a mild steel while only the metallic plate 172a may be composed of a high tensile strength steel.

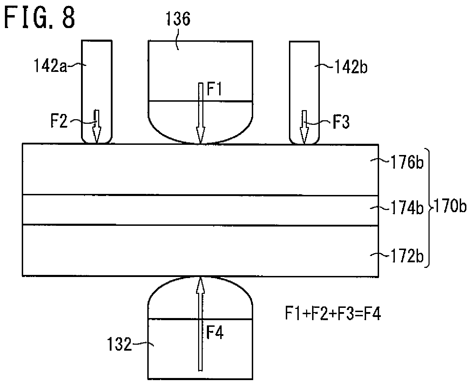

Though the uppermost metallic plate 176a is thinner than the metallic plates 172a, 174a to be welded in the above embodiment, the stacked body 170a is not limited thereto. A stacked body 170b shown in FIG. 8 may be used instead of the stacked body 170a. In the stacked body 170b, a metallic plate 174b having the smallest thickness is interposed between metallic plates 172b, 176b. In this case, for example, the metallic plate 172b is composed of a high tensile strength steel while the metallic plates 174b, 176b are composed of a mild steel, but the combination of the materials is not particularly limited thereto.

It is to be understood that the middle metallic plate may have the largest thickness, and the undermost metallic plate may be thinner than the other two metallic plates.

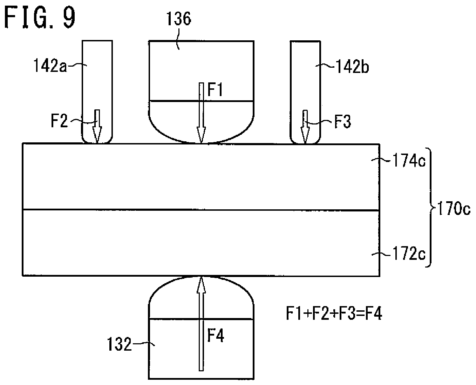

The number of the metallic plates is not particularly limited to 3. For example, a stacked body 170c shown in FIG. 9 may be used instead of the stacked body 170a. In the stacked body 170c, a metallic plate 174c is stacked on a metallic plate 172c, and the both are composed of a high tensile strength steel.

In a second embodiment, the pressing members 138a, 138b are used as auxiliary electrodes, to which a current is applied. The components of the second embodiment, which are identical to those of FIGS. 1 to 9, are denoted by identical reference characters. Therefore, detailed explanations thereof are omitted.

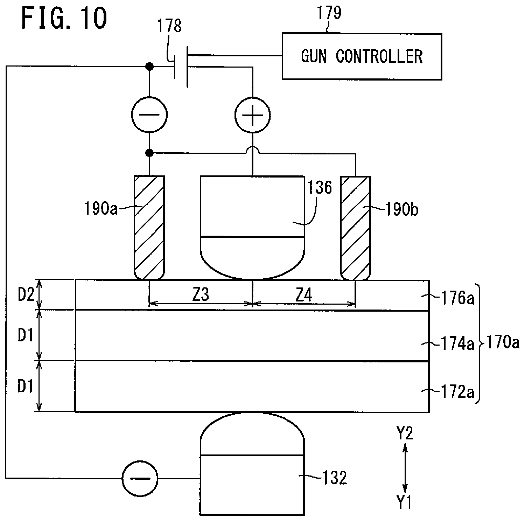

FIG. 10 is a partially enlarged horizontal cross-sectional view of essential features showing a spot welding apparatus according to the second embodiment. The spot welding apparatus of the second embodiment is substantially equal to the apparatus of the first embodiment except that the pressing members 138a, 138b are electrically connected to the negative terminal of the power source 178. Also in the second embodiment, the current flows from the upper tip 136 to the lower tip 132. In the second embodiment, the pressing members 138a, 138b are hereinafter referred to as the auxiliary electrodes 190a, 190b to facilitate the understanding of the differences from the first embodiment.

As described above, the lower tip 132 and the auxiliary electrodes 190a, 190b are electrically connected to the negative terminal of the power source 178, and the upper tip 136 is electrically connected to the positive terminal of the power source 178. Therefore, the auxiliary electrodes 190a, 190b have polarities opposite to that of the upper tip 136 though all the components are brought into contact with the uppermost metallic plate 176a in the stacked body 170a. In the following drawings, when the upper tip 136 is electrically connected with the auxiliary electrodes 190a, 190b and a branching current i2 is generated, the polarities of the auxiliary electrodes 190a, 190b are shown. On the other hand, when the branching current i2 is not generated, the polarities of the auxiliary electrodes 190a, 190b are not shown.

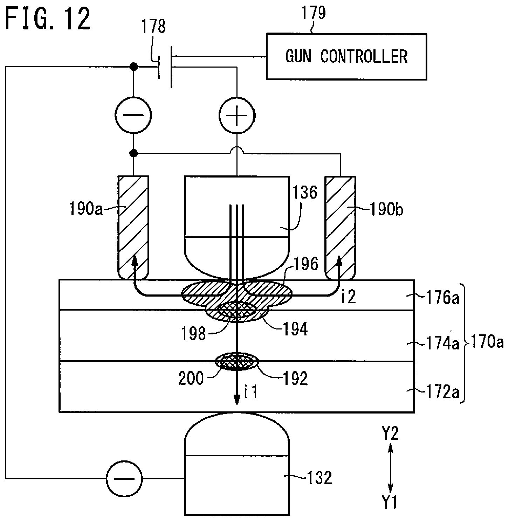

The distances Z3, Z4 between the upper tip 136 and the auxiliary electrodes 190a, 190b are controlled such that some portions exhibit surface pressures lower than those from the upper tip 136 and the auxiliary electrodes 190a, 190b to achieve an appropriate pressure distribution as in the first embodiment (see FIG. 5). Therefore, the upper tip 136 is separated from the auxiliary electrodes 190a, 190b at certain distances. However, when the distances Z3, Z4 are excessively large between the upper tip 136 and the auxiliary electrodes 190a, 190b, the resistances therebetween are increased, so that it is difficult to obtain a flow of the branching current i2 to be hereinafter described (see FIG. 12).

Thus, the distances Z3, Z4 are controlled such that the above appropriate surface pressure distribution is achieved in the metallic plates 176a, 174a, and an appropriate branching current i2 flows under the resistances between the upper tip 136 and the auxiliary electrodes 190a, 190b.

The main part of the spot welding apparatus of the second embodiment is basically constructed as described above. Operations and advantages of the apparatus will be described below.

In a spot welding method using the spot welding apparatus for spot welding the stacked body 170a, first the robot moves the welding gun to position the stacked body 170a between the upper tip 136 and the lower tip 132 in the same manner as the first embodiment. Thereafter, the upper tip 136 and the lower tip 132 are moved close to each other, whereby the stacked body 170a is gripped therebetween.

Before, at the same time as, or after the gripping, the compressed air is supplied to the rooms 166a, 166b through the air supply/discharge passages 168a, 168b (see FIGS. 1 and 2). The pistons 156a, 156b and the piston rods 148a, 148b are moved downward by the compressed air, so that the auxiliary electrodes 190a, 190b are lowered toward the stacked body 170a in the arrow Y1 direction. Consequently, the auxiliary electrodes 190a, 190b are brought into contact with the metallic plate 176a as shown in the schematic vertical cross-sectional view of FIG. 10. Of course, the coil springs 164a, 164b are compressed during the downward movement of the pistons 156a, 156b and the piston rods 148a, 148b.

Also in the second embodiment, the gun controller 179 controls the pressing forces F2, F3 of the auxiliary electrodes 190a, 190b against the metallic plate 176a such that the total pressing force (F1 + F2 + F3) of the upper tip 136 and the auxiliary electrodes 190a, 190b is well balanced with the pressing force F4 of the lower tip 132.

Also in the second embodiment, it is preferred that the difference between the pressing force F1 of the upper tip 136 and the pressing forces F2, F3 of the auxiliary electrodes 190a, 190b is determined in view of maximizing the sizes of the nugget between the metallic plates 172a, 174a and the nugget between the metallic plates 174a, 176a as in the first embodiment.

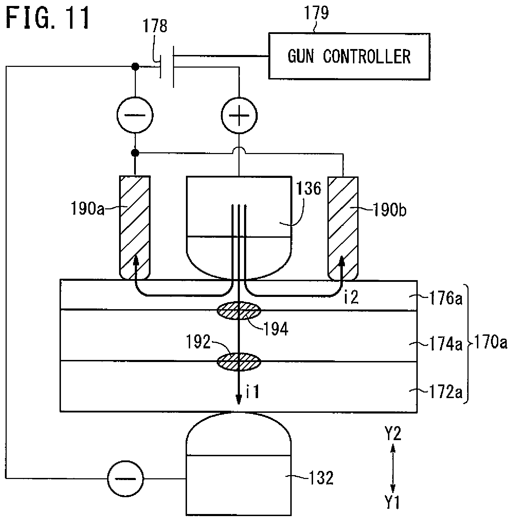

Next, energization is started. In the second embodiment, since the upper tip 136 and the lower tip 132 are connected to the positive and negative terminals of the power source 178 respectively, as shown in FIG. 11, a current i1 flows from the upper tip 136 toward the lower tip 132. Heated regions 192, 194 are formed between the metallic plates 172a, 174a and between the metallic plates 174a, 176a respectively by Joule heating generated due to the current i1.

Also the auxiliary electrodes 190a, 190b having the negative polarities are in contact with the metallic plate 176a. Therefore, in addition to the current i1, the branching current i2 flows from the upper tip 136 toward the auxiliary electrodes 190a, 190b.

Thus, in the second embodiment, the branching current i2 is generated not in the metallic plates 172a, 174a but in the metallic plate 176a. As a result, the metallic plate 176a exhibits a larger current value in this method as compared to conventional spot welding methods using only the upper tip 136 and the lower tip 132.

In this method, another heated region 196 different from the heated region 194 is formed in the metallic plate 176a. As shown in FIG. 12, the heated region 196 is grown with time and then integrated with the heated region 194.

The contact surface between the metallic plates 174a, 176a is subjected to heat from both of the integrated heated regions 194, 196. Furthermore, in the second embodiment, the contact resistance at the contact surface between the metallic plates 174a, 176a is higher than that at the contact surface between the metallic plates 172a, 174a as in the first embodiment. Therefore, the contact surface is heated to a sufficient temperature and melted, so that a nugget 198 is formed between the metallic plates 174a, 176a.

As the ratio of the branching current i2 is increased, the heated region 196 can be made larger. However, when the ratio of the branching current i2 is excessively high, the current value of the current i1 is reduced, whereby the sizes of the heated regions 192, 194 are reduced. Thus, the size of the nugget 200 is liable to be reduced, while the size of the nugget 198 becomes saturated. The ratio of the branching current i2 is preferably selected in view of growing the nugget 200 to a sufficient size under the current i1.

For example, the ratio between the current i1 and the branching current i2 can be controlled by changing the distances Z3, Z4 between the upper tip 136 and the auxiliary electrodes 190a, 190b (see FIG. 10) as described above. The ratio between the current i1 and the branching current i2 is preferably e.g. 70:30.

A melted portion and hence the nugget 198 are grown with the passage of time as long as the energization is continued. Therefore, the nugget 198 can be sufficiently grown by performing the energization over an appropriate time.

The current value of the current i1 in the metallic plates 172a, 174a is smaller than that in a conventional spot welding method. Therefore, the amount by which the metallic plates 172a, 174a are heated can be prevented from excessively increasing in the process of growing the melted portion (the nugget 198) between the metallic plates 174a, 176a. Consequently, the apparatus is capable of eliminating the possibility of the spatter generation.

In this process, a melted portion to be solidified into the nugget 200 is formed by the current i1 between the metallic plates 172a, 174a. When the branching current i2 is continuously applied, the total amount of the current i1 is reduced, and the heated region 192 and hence the nugget 200 are liable to be reduced in size, as compared with the case without the branching current i2.

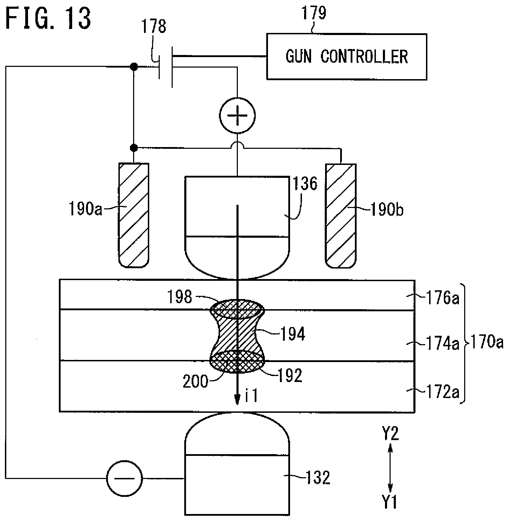

Therefore, in the case of further increasing the size of the nugget 200, it is preferred that only the auxiliary electrodes 190a, 190b are separated from the metallic plate 176a as shown in FIG. 13, and even thereafter current continues to be conducted from the upper tip 136 to the lower tip 132. When the auxiliary electrodes 190a, 190b are separated from the metallic plate 176a, the current value of the current i1 is increased, and the total amount of the current i1 is increased in the energization.

Only the auxiliary electrodes 190a, 190b may be separated from the metallic plate 176a by using the compressed air supply/discharge mechanism for discharging the compressed air from the rooms 166a, 166b (see FIG. 2). The pistons 156a, 156b are moved upward due to the elastic forces of the coil springs 164a, 164b by discharging the compressed air. Thus, the pistons 156a, 156b, the piston rods 148a, 148b, and the auxiliary electrodes 190a, 190b disposed on the ends of the piston rods 148a, 148b are moved upward. Consequently, the auxiliary electrodes 190a, 190b are separated from the metallic plate 176a, and are returned to the original positions. A negative pressure may be provided in the rooms 166a, 166b to lift the piston rods 148a, 148b.

As a result, the branching current i2 vanishes, so that only the current i1 flows in the metallic plate 176a from the upper tip 136 to the lower tip 132, and the heated region 196 (see FIG. 12) disappears.

Thereafter, the metallic plates 172a, 174a are under a common spot welding condition. Thus, the generated amount of Joule heating is increased in the thick metallic plates 172a, 174a, whereby the heated region 192 is expanded and further heated to a higher temperature. The contact surface between the metallic plates 172a, 174a is heated to a sufficient temperature and melted by the heated region 192 having the higher temperature, and the melted portion (the nugget 200) is grown larger.

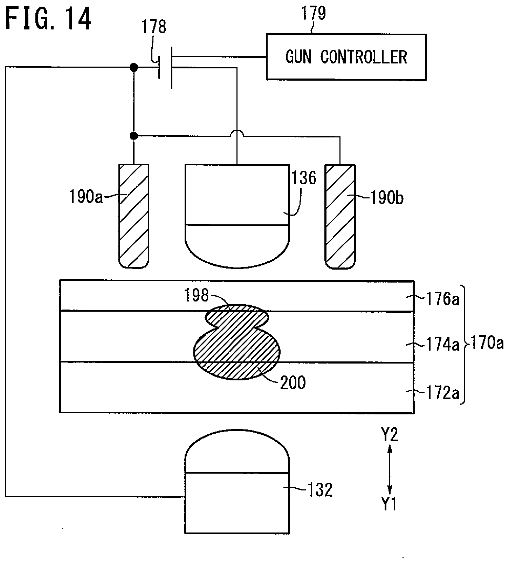

Thereafter, the energization may be continued until the melted portion (the nugget 200) grows sufficiently, e.g. until the melted portion for forming the nugget 200 is integrated with the melted portion for forming the nugget 198 as shown in FIG. 14. The relation between the energization time and the growth of the nugget 200 may be confirmed in advance by a spot welding test using test pieces.

The contact surface between the metallic plates 172a, 174a is preheated by the heated region 192 formed by passage of the current i1 while the nugget 198 is grown between the metallic plates 174a, 176a. Therefore, the affinity of the metallic plates 172a, 174a with each other is improved before the melted portion to be converted to the nugget 200 is grown larger. Consequently, the spatter generation is hardly caused.

As described above, in the second embodiment, the spatter generation can be prevented in both of the process of growing the nugget 198 between the metallic plates 174a, 176a and the process of growing the nugget 200 between the metallic plates 172a, 174a.

After the melted portion for forming the nugget 200 is sufficiently grown in a predetermined time, the energization is stopped, and the upper tip 136 is separated from the metallic plate 176a as shown in FIG. 14. Alternatively, the upper tip 136 and the lower tip 132 are electrically isolated by separating the upper tip 136 from the metallic plate 176a.

The operations from the start to the end of the spot welding method are performed under the control of the gun controller 179.

When the energization is stopped in the above manner, the heating of the metallic plates 172a, 174a is stopped. The obtained melted portion is cooled and solidified with the passage of time, whereby the metallic plates 172a, 174a are joined to each other by the nugget 200.

Consequently, in the stacked body 170a, the metallic plates 172a, 174a are joined to each other, and the metallic plates 174a, 176a are joined to each other, to obtain a bonded article as a final product.

The bonded product is excellent in the bonding strengths between the metallic plates 172a, 174a and between the metallic plates 174a, 176a. This is because the nugget 198 between the metallic plates 174a, 176a is sufficiently grown under the flow of the branching current i2 in the metallic plate 176a as described above.

As described above, in the spot welding apparatus of the second embodiment, the auxiliary electrodes 190a, 190b can be formed only by electrically connecting the pressing members 138a, 138b to the negative terminal of the power source 178. Therefore, the structure of the spot welding apparatus is not complicated due to the auxiliary electrodes 190a, 190b.

Also in the second embodiment, the offset loads on the air cylinders 146a, 146b can be easily reduced as in the first embodiment.

Also in the second embodiment, the object to be welded is not limited to the stacked body 170a. The number of the metallic plates, the materials, and the thicknesses may be variously changed in the stacked body. Several specific examples will be described below.

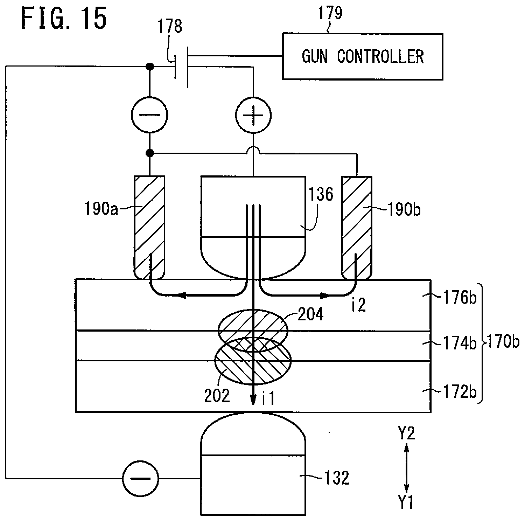

In the stacked body 170b shown in FIG. 15, the metallic plate 174b having the smallest thickness is interposed between the metallic plates 172b, 176b as described above. For example, the metallic plate 172b is a high resistance workpiece composed of a high tensile strength steel, and the metallic plates 174b, 176b are low resistance workpieces composed of a mild steel.

In a case where the stacked body 170b is spot-welded only by the upper tip 136 and the lower tip 132, the contact surface between the metallic plates 172b, 174b is melted first. This is because the metallic plate 172b is the high resistance workpiece, whereby the contact resistance between the metallic plates 172b, 174b is higher than that between the metallic plates 174b, 176b. Therefore, when the energization of the upper tip 136 and the lower tip 132 is continued to sufficiently grow the nugget at the contact surface between the metallic plates 174b, 176b, the spatter generation may be caused at the contact surface between the metallic plates 172b, 174b.

In contrast, as shown in FIG. 15, since the auxiliary electrodes 190a, 190b are used in the second embodiment, both the heated regions 192, 194 are formed at the contact surface between the metallic plates 172b, 174b and the contact surface between the metallic plates 174b, 176b respectively. This is because the contact surface between the metallic plates 174b, 176b is sufficiently heated by the branching current i2 in the metallic plate 176b in the same manner as the above stacked body 170a.

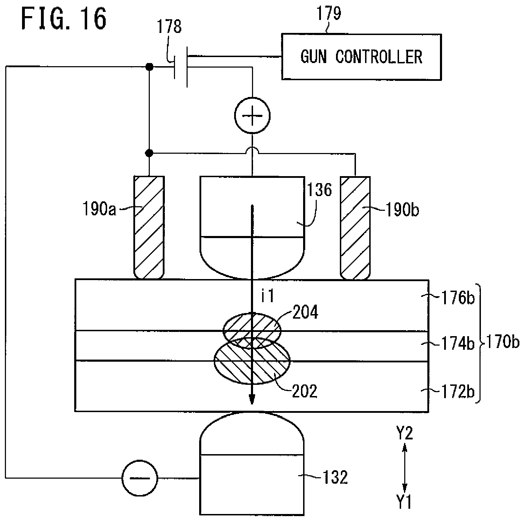

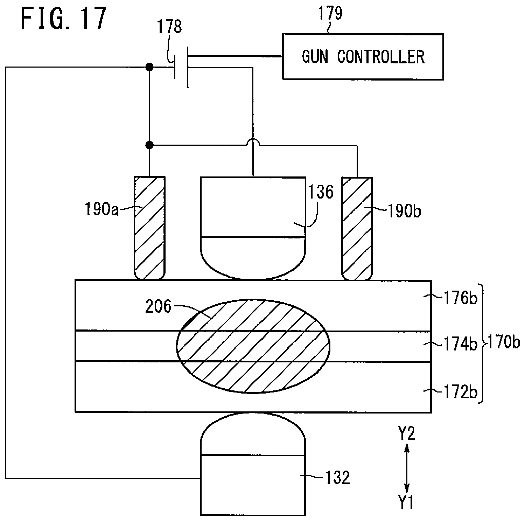

Consequently, nuggets 202, 204 are formed as shown in FIG. 16. After the branching current i2 has vanished, the current i1 may be continuously applied. In this case, for example, as shown in FIG. 17, a sufficiently larger nugget 206 can be developed over the contact surface between the metallic plates 172b, 174b and the contact surface between the metallic plates 174b, 176b.

As is clear from the above explanations of the spot welding of the stacked assemblies 170a, 170b, by using the auxiliary electrodes 190a, 190b, the heated regions and hence the nuggets can be shifted closer to the auxiliary electrodes 190a, 190b.

Though the metallic plate 172b is composed of the high tensile strength steel and the metallic plates 174b, 176b are composed of the mild steel in the above example, of course, the combination of the materials are not particularly limited thereto.

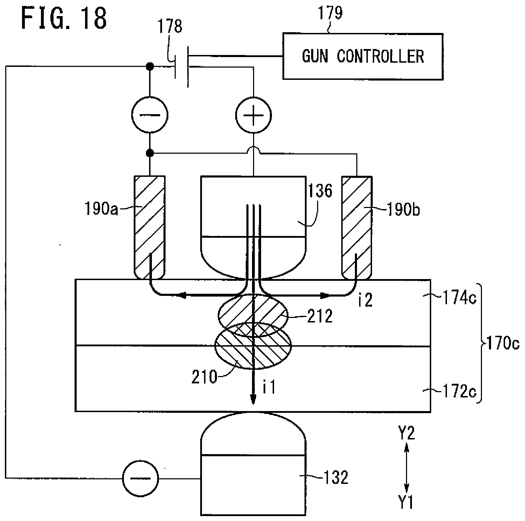

The stacked body 170c shown in FIG. 18 is provided by stacking the metallic plate 174c on the metallic plate 172c and may be spot-welded by using the auxiliary electrodes 190a, 190b, the both metallic plates being composed of a high tensile strength steel. As shown in FIGS. 26 and 28, in the case of not using the auxiliary electrodes 190a, 190b, the melted portions 6, 9 grow larger at the contact surface between the metallic plates 172c, 174c (the high resistance workpieces 1, 2) in a relatively short time. Therefore, the spatter generation is liable to be caused.

In contrast, as shown in FIG. 18, since the auxiliary electrodes 190a, 190b are used in the second embodiment, a heated region 210 is formed at the contact surface between the metallic plates 172c, 174c, and a heated region 212 is formed above the contact surface (i.e. in the vicinity of the auxiliary electrodes 190a, 190b in the metallic plate 174c). This is because the metallic plate 174c is sufficiently heated by the flow of the branching current i2 in the metallic plate 174c. Thus, also in this case, the heated regions and hence the nuggets (see FIG. 18) can be shifted closer to the auxiliary electrodes 190a, 190b.

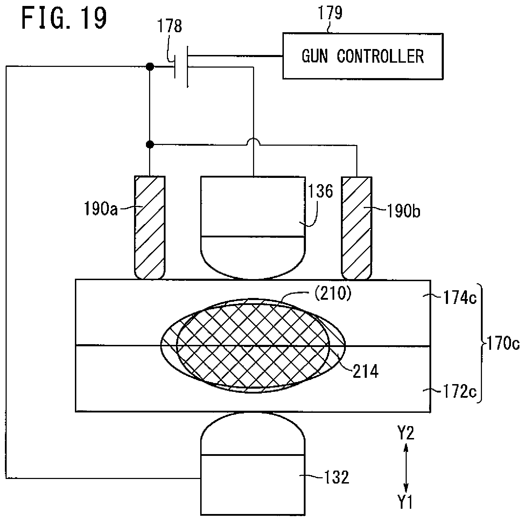

Consequently, the contact surface between the metallic plates 172c, 174c is softened, thereby improving the sealing property. Thus, even when the current i1 is continuously applied to form a sufficiently large nugget 214 as shown in FIG. 19, the spatter generation is hardly caused.

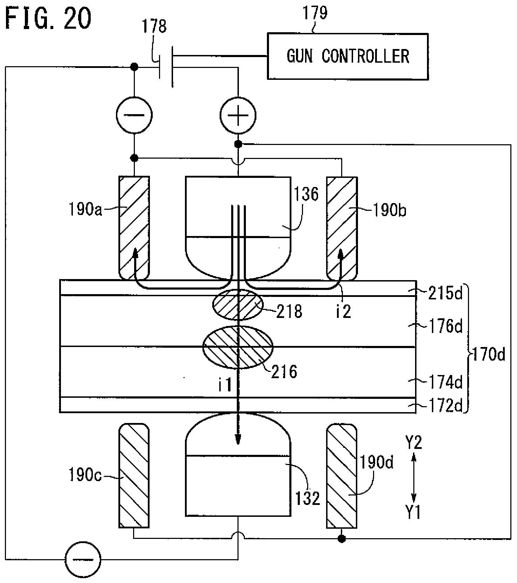

Spot welding of a stacked body 170d shown in FIG. 20 will be described below. The stacked body 170d is obtained by stacking a low resistance metallic plate 172d composed of a mild steel, high resistance metallic plates 174d, 176d composed of a high tensile strength steel, and a low resistance metallic plate 215d composed of a mild steel in this order from below. The metallic plates 172d, 215d has thicknesses smaller than those of the metallic plates 174d, 176d.

The auxiliary electrodes 190a, 190b are disposed in the vicinity of the upper tip 136, and furthermore auxiliary electrodes 190c, 190d are disposed in the vicinity of the lower tip 132. The auxiliary electrodes 190c, 190d are electrically connected to the positive terminal of the power source 178, and thereby have a polarity opposite to that of the lower tip 132. The auxiliary electrodes 190c, 190d can be located in this manner by disposing the holder 140 and the air cylinders 146a, 146b in the vicinity of the lower tip 132 as in the vicinity of the upper tip 136.

As shown in FIG. 20, the stacked body 170d is gripped between the upper tip 136 and the lower tip 132. Before, at the same time as, or after the gripping, only the auxiliary electrodes 190a, 190b are brought into contact with the metallic plate 215d. When the energization is started, the current i1 flows from the upper tip 136 to the lower tip 132, and the branching current i2 flows from the upper tip 136 to the auxiliary electrodes 190a, 190b. Then, nuggets 216, 218 are formed at the contact surfaces between the metallic plates 174d, 176d and between the metallic plates 176d, 215d respectively.

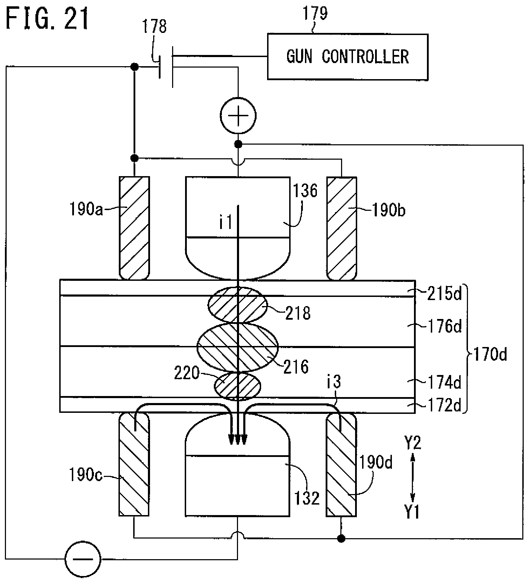

Then, as shown in FIG. 21, the auxiliary electrodes 190a, 190b are electrically disconnected from the negative terminal of the power source 178 to eliminate the branching current i2. Before, at the same time as, or after the disconnection, the auxiliary electrodes 190c, 190d are brought into contact with the metallic plate 172d. As a result, a branching current i3 flows through the undermost metallic plate 172d from the auxiliary electrodes 190c, 190d to the lower tip 132.

When the branching current i2 vanishes, the growth of the nugget 218 is stopped. Meanwhile, the current i1 continuously flows from the upper tip 136 to the lower tip 132, and therefore the nugget 216 is grown larger at the contact surface between the metallic plates 174d, 176d. Furthermore, another nugget 220 is formed at the contact surface between the metallic plates 172d, 174d by the branching current i3.

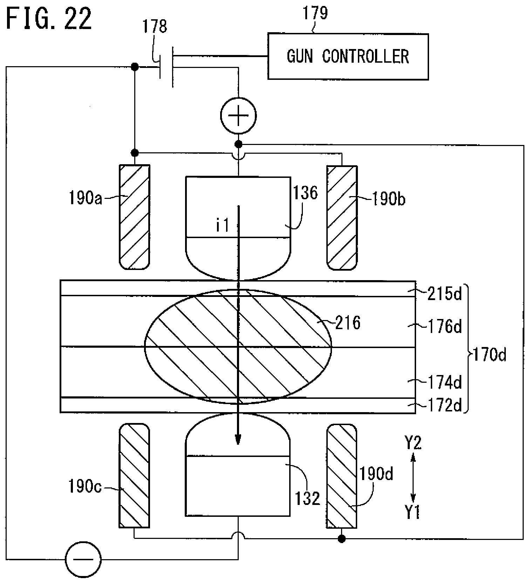

Then, as shown in FIG. 22, the auxiliary electrodes 190c, 190d are separated from the metallic plate 172d to eliminate the branching current i3, whereby the growth of the nugget 220 is stopped. Thereafter, by continuously applying the current i1, only the nugget 216 at the contact surface between the metallic plates 174d, 176d may be further grown larger and may be integrated with the nuggets 218, 220.

The object to be welded may have a complicated shape. As described above, even in this case, the object to be welded can be located in a desired welding position without interference from the upper tip 136 and the auxiliary electrodes 190a, 190b.

Though the auxiliary electrodes 190a, 190b are separated from the metallic plate 176a prior to the upper tip 136 in the second embodiment, the auxiliary electrodes 190a, 190b and the upper tip 136 may be separated from the metallic plate 176a at the same time.

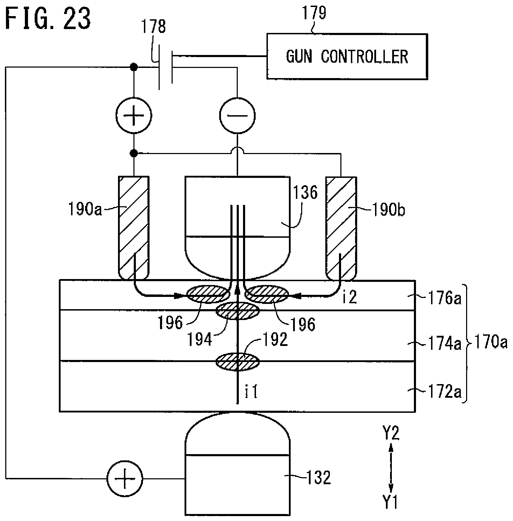

As shown in FIG. 23, a current may flow from the lower tip 132 on the metallic plate 172a to the upper tip 136 on the metallic plate 176a. Also in this case, the auxiliary electrodes 190a, 190b on the metallic plate 176a have polarities opposite to that of the upper tip 136. Thus, the lower tip 132 and the auxiliary electrodes 190a, 190b are electrically connected to the positive terminal of the power source 178, and the upper tip 136 is electrically connected to the negative terminal of the power source 178. Consequently, the current i1 flows from the lower tip 132 to the upper tip 136, and the branching current i2 flows from the auxiliary electrodes 190a, 190b to the upper tip 136.

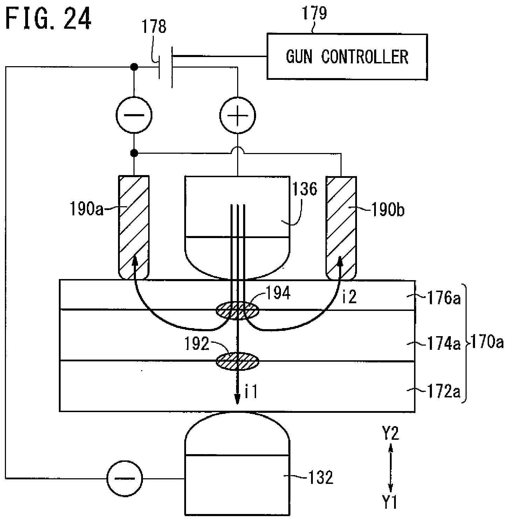

As shown in FIG. 24, the branching current i2 may flow not only in the metallic plate 176a on the upper tip 136 but also in the metallic plate 174a located immediately beneath the metallic plate 176a.

The auxiliary electrodes 190a, 190b are separated from the metallic plate 176a in the above manner. Alternatively, a switch may be disposed between the auxiliary electrodes 190a, 190b and the power source 178, and only the branching current, which flows in the direction from the upper tip 136 to the auxiliary electrodes 190a, 190b or the opposite direction, may be stopped by turning the switch to the disconnected (off) state. In this case, of course, the switch is turned to the connected (on) state to form the heated region 196.

In any case, the auxiliary electrode is not particularly limited to the above-described two auxiliary electrodes 190a, 190b having the long rod shape. For example, one, three, or more long rods may be used as the auxiliary electrodes. In the case of using three or more auxiliary electrodes, a plurality of the auxiliary electrodes 190a, 190b may be contacted with and separated from the outermost metallic plate at the same time in the same manner as the two auxiliary electrodes 190a, 190b. Each auxiliary electrode may have a ring shape surrounding the lower tip 132 or the upper tip 136.

The auxiliary electrodes 190a, 190b in the spot welding apparatus of the second embodiment may be electrically isolated from the power source 178 to perform the spot welding method of the first embodiment. Thus, in the spot welding apparatus of the second embodiment, the auxiliary electrodes 190a, 190b can be energized or not energized, and thereby can be used only as the pressing members or used also as the electrodes for generating the branching current i2.

Furthermore, though the C-type welding gun is used in the first and second embodiments, the welding gun may be a so-called X-type gun. In this case, the lower tip 132 and the upper tip 136 may be mounted on a pair of openable and closable chucks respectively. When the chucks are opened or closed, the lower tip 132 and the upper tip 136 are moved away from or close to each other.

It is to be understood that the stacked body may contain five or more metallic plates.

## Claims

1. A spot welding apparatus (110) for spot welding a stacked body (170a) of a plurality of workpieces (172a, 174a, 176a) including the outermost workpiece (176a), comprising
a first welding tip (136) and a second welding tip (132), between which the stacked body (170a) is interposed,
a pressing member (138a, 138b) configured to press the outermost workpiece (176a) of the stacked body (170a), the first welding tip (136) and the pressing member (138a, 138b) being brought into contact with different portions of the outermost workpiece (176a), and
a holder (140) configured to hold the first welding tip (136) and the pressing member (138a, 138b), which is displaced by a holder displacement mechanism,
**characterized in that** the holder (140) has a bore (150a, 150b), an air cylinder (146a, 146b) is being provided in the holder (140) for displacing the pressing member (138a, 138b), and
the spot welding apparatus further comprises a sleeve (152a, 152b) inserted into the bore (150a, 150b),
wherein the air cylinder (146a, 146b) is formed in the sleeve (152a, 152b) and comprises:
a piston rod (148a, 148b) connected to the pressing member (138e, 138b) at one end; and
a piston (156a, 156b) connected to the other end of the piston rod (148a, 148b),
the piston (156a, 156b) being in sliding contact with the sleeve (152a, I52b), and
the sleeve (I52a, 152b) is having an insulating property so that the piston (156e, 156b) is electrically isolated from the holder (140).

2. The spot welding apparatus (110) according to claim 1, further comprising:
a bearing (154a, 154b) inserted into the sleeve (152a, 152b); and
a coil spring (164a, 164b) having one end stopped by an upper end surface of the bearing (154a, 154b) and the other end seated on a lower end surface of the piston (156a, 156b),
wherein the piston rod (148a, 148b) extends through the bearing (154a, 154b) and the coil spring (164a, 164b).

3. The spot welding apparatus (110) according to claim 1 or 2, wherein
the pressing member (138a, 138b) is configured to act as an auxiliary electrode (190a, 190b), the auxiliary electrode (190a, 190b) has a polarity opposite to that of the first welding tip (136), and the auxiliary electrode (190a, 190b) and the first welding tip (136) are configured to flow a branching current either from the first welding tip (136) to the auxiliary electrode (190a, 190b), or from the auxiliary electrode (190a, 190b) to the first welding tip (136), when electric current is conducted between the first welding tip (136) and the second welding tip (132).

4. The spot welding apparatus (110) according to claim 3, further comprising another auxiliary electrode (190c, 190d) disposed in a vicinity of the second welding tip (132), wherein the other auxiliary electrode (190c, 190d) has a polarity opposite to that of the second welding tip (132), and the other auxiliary electrode (190c, 190d) and the second welding tip (132) are configured to flow another branching current from the other auxiliary electrode (190c, 190d) to the second welding tip (132) or from the second welding tip (132) to the other auxiliary electrode (190c, 190d) after the branching current from the first welding tip (136) to the auxiliary electrode (190a, 190b) or from the auxiliary electrode (190a, 190b) to the first welding tip (136) has vanished.

## Patentansprüche

1. Punktschweißvorrichtung (110) zum Punktschweißen eines gestapelten Körpers (170a) aus einer Mehrzahl von Werkstücken (172a, 174a, 176a) mit dem äußersten Werkstück (176a), umfassend
eine erste Schweißspitze (136) und eine zweite Schweißspitze (132), zwischen denen der gestapelte Körper (170a) angeordnet ist,
ein Presselement (138a, 138b), das konfiguriert ist, um das äußerste Werkstück (176a) des gestapelten Körpers (170a) zu pressen, wobei die erste Schweißspitze (136) und das Presselement (138a, 138b) mit verschiedenen Abschnitten des äußersten Werkstücks (176a) in Kontakt gebracht werden, und
einen Halter (140), der konfiguriert ist, um die erste Schweißspitze (136) und das Presselement (138a, 138b) aufzunehmen, das durch einen Halterverschiebungsmechanismus verschoben wird,
**dadurch gekennzeichnet, dass**
der Halter (140) eine Bohrung (150a, 150b) aufweist,
ein Luftzylinder (146a, 146b) in der Halterung (140) zum Verschieben des Pressteils (138a, 138b) vorgesehen ist, und
die Punktschweißvorrichtung ferner eine Hülse (152a, 152b) umfasst, die in die Bohrung (150a, 150b) eingesetzt ist,
wobei der Luftzylinder (146a, 146b) in der Hülse (152a, 152b) ausgebildet ist und umfasst:
eine Kolbenstange (148a, 148b), die an einem Ende mit dem Presselement (138e, 138b) verbunden ist; und
einen Kolben (156a, 156b), der mit dem anderen Ende der Kolbenstange (148a, 148b) verbunden ist,
der Kolben (156a, 156b) in Gleitkontakt mit der Hülse (152a, I52b) steht, und
die Hülse (152a, 152b) eine Isoliereigenschaft aufweist, so dass der Kolben (156e, 156b) von dem Halter (140) elektrisch isoliert ist.

2. Punktschweißvorrichtung (110) nach Anspruch 1, ferner umfassend:
ein Lager (154a, 154b), das in die Hülse (152a, 152b) eingesetzt ist; und
eine Schraubenfeder (164a, 164b) mit einem Ende, das durch eine obere Endfläche des Lagers (154a, 154b) gestoppt wird und das andere Ende auf einer unteren Endfläche des Kolbens (156a, 156b) sitzt,
wobei sich die Kolbenstange (148a, 148b) durch das Lager (154a, 154b) und die Schraubenfeder (164a, 164b) erstreckt.

3. Punktschweißvorrichtung (110) nach Anspruch 1 oder 2, wobei das Presselement (138a, 138b) konfiguriert ist, um als Hilfselektrode (190a, 190b) zu wirken, die Hilfselektrode (190a, 190b) eine Polarität aufweist, die der der ersten Schweißspitze (136) entgegengesetzt ist, und die Hilfselektrode (190a), 190b) und die erste Schweißspitze (136) konfiguriert sind, um einen Abzweigstrom entweder von der ersten Schweißspitze (136) zur Hilfselektrode (190a, 190b) oder von der Hilfselektrode (190a, 190b) zur ersten Schweißspitze (136) zu fließen, wenn elektrischer Strom zwischen der ersten Schweißspitze (136) und der zweiten Schweißspitze (132) geleitet wird.

4. Punktschweißvorrichtung (110) nach Anspruch 3, ferner umfassend eine weitere Hilfselektrode (190c, 190d), die in einer Nähe der zweiten Schweißspitze (132) angeordnet ist, wobei die andere Hilfselektrode (190c, 190d) eine der zweiten Schweißspitze (132) entgegengesetzte Polarität aufweist, und die andere Hilfselektrode (190c), 190d) und die zweite Schweißspitze (132) konfiguriert sind, um einen weiteren Abzweigstrom von der anderen Hilfselektrode (190c, 190d) zur zweiten Schweißspitze (132) oder von der zweiten Schweißspitze (132) zur anderen Hilfselektrode (190c, 190d) zu fließen zu lassen, nachdem der Abzweigstrom von der ersten Schweißspitze (136) zur Hilfselektrode (190a, 190b) oder von der Hilfselektrode (190a, 190b) zur ersten Schweißspitze (136) abgeklungen ist.

## Revendications

1. Appareil de soudage par point (110) pour le soudage par point d'un corps empilé (170a) d'une pluralité de pièces de travail (172a, 174a, 176a) incluant la pièce de travail la plus extérieure (176a), comprenant
une première pointe de soudage (136) et une deuxième pointe de soudage (132), entre lesquelles est interposé le corps empilé (170a),
un élément de pressage (138a, 138b) configuré pour presser la pièce de travail la plus extérieure (176a) du corps empilé (170a), la première pointe de soudage (136) et l'élément de pressage (138a, 138b) étant amenés en contact avec différentes portions de la pièce de travail la plus extérieure (176a), et
un support (140) configuré pour supporter la première pointe de soudage (136) et l'élément de pressage (138a, 138b) qui est déplacé par un mécanisme de déplacement de support, **caractérisé en ce que**
le support (140) présente un trou (150a, 150b),
un cylindre à air (146a, 146b) est prévu dans le support (140) pour le déplacement de l'élément de pressage (138a, 138b), et
l'appareil de soudage par point comprend en outre un manchon (152a, 152b) inséré dans le trou (150a, 150b),
dans lequel le cylindre à air (146a, 146b) est formé dans le manchon (152a, 152b) et comprend :
une tige de piston (148a, 148b) raccordée à l'élément de pressage (138e, 138b) au niveau d'une extrémité ; et
un piston (156a, 156b) raccordé à l'autre extrémité de la tige de piston (148a, 148b),
le piston (156a, 156b) étant en contact coulissant avec le manchon (152a, 152b), et
le manchon (152a, 152b) présente une propriété isolante de sorte que le piston (156e, 156b) soit isolé électriquement du support (140).

2. Appareil de soudage par point (110) selon la revendication 1, comprenant en outre :
un palier (154a, 154b) inséré dans le manchon (152a, 152b) ; et
un ressort hélicoïdal (164a, 164b) présentant une extrémité arrêtée par une surface d'extrémité supérieure du palier (154a, 154b) et l'autre extrémité logée sur une surface d'extrémité inférieure du piston (156a, 156b),
dans lequel la tige de piston (148a, 148b) s'étend au travers du palier (154a, 154b) et du ressort hélicoïdal (164a, 164b).

3. Appareil de soudage par point (110) selon la revendication 1 ou 2, dans lequel
l'élément de pressage (138a, 138b) est configuré pour agir comme une électrode auxiliaire (190a, 190b), l'électrode auxiliaire (190a, 190b) présente une polarité opposée à celle de la première pointe de soudage (136), et l'électrode auxiliaire (190a, 190b) et la première pointe de soudage (136) sont configurées pour faire circuler un courant de dérivation soit de la première pointe de soudage (136) à l'électrode auxiliaire (190a, 190b), soit de l'électrode auxiliaire (190a, 190b) à la première pointe de soudage (136), dans lequel du courant électrique est conduit entre la première pointe de soudage (136) et la deuxième pointe de soudage (132).

4. Appareil de soudage par point (110) selon la revendication 3, comprenant en outre une autre électrode auxiliaire (190c, 190d) disposée à proximité de la deuxième pointe de soudage (132), dans lequel l'autre électrode auxiliaire (190c, 190d) présente une polarité opposée à celle de la deuxième pointe de soudage (132), et l'autre électrode auxiliaire (190c, 190d) et la deuxième pointe de soudage (132) sont configurées pour faire circuler un autre courant de dérivation de l'autre électrode auxiliaire (190c, 190d) à la deuxième pointe de soudage (132) ou à la deuxième pointe de soudage (132) à l'autre électrode auxiliaire (190c, 190d) après que le courant de dérivation de la première pointe de soudage (136) à l'électrode auxiliaire (190a, 190b) ou de l'électrode auxiliaire (190a, 190b) à la première pointe de soudage (136) a disparu.
